# EUROPÄISCHE PATENTSCHRIFT

(11) **EP 1 867 019 B1**
(45) Veröffentlichungstag und Bekanntmachung des Hinweises auf die Patenterteilung: **20.07.2016**
(21) Anmeldenummer: 06723742.0
(22) Anmeldetag: 25.03.2006
(51) Int. Cl.: H02B 1/36

(54) **MODULFRONT FÜR EIN SCHALTANLAGENMODUL, SCHALTANLAGENMODUL UND ELEKTRISCHE SCHALTANLAGE**
MODULE FRONT FOR A SWITCHGEAR MODULE, SWITCHGEAR MODULE AND ELECTRICAL SWITCHGEAR
FRONT MODULAIRE POUR MODULE D'INSTALLATION DE DISTRIBUTION, MODULE D'INSTALLATION DE DISTRIBUTION ET INSTALLATION DE DISTRIBUTION ELECTRIQUE

(30) Priorität: 08.04.2005 DE 102005016544
(43) Veröffentlichungstag der Anmeldung: 19.12.2007
(73) Patentinhaber: ABB AG, 68309 Mannheim (DE)
(72) Erfinder: SCHMITT, Hans-Jürgen, 69493 Hirschberg (DE); KRAFT, Klaus, 69123 Heidelberg (DE); MERKEL, Hans-Peter, 69198 Schriesheim (DE); MÜLER, Klaus-Georg, 69259 Wilhelmsfeld (DE)
(86) Internationale Anmeldenummer: PCT/EP2006/002764
(87) Internationale Veröffentlichungsnummer: WO 2006/105881

(56) Entgegenhaltungen:
- DE-A1- 3 628 113
- DE-A1- 19 511 648
- DE-A1- 19 523 592
- US-A- 5 095 403
- US-B1- 6 169 651
- US-B1- 6 289 267

## Beschreibung

Die Erfindung betrifft eine Modulfront für ein Schaltanlagenmodul, insbesondere ein Einschubmodul, mit den Merkmalen des Anspruch 1 sowie ein Schaltanlagenmodul mit erfindungsgemäßer Modulfront und eine elektrische Schaltanlage, insbesondere eine Mittelspannungs- oder Niederspannungsschaltanlage, mit wenigstens einem solchen Schaltanlagenmodul mit erfindungsgemäßer Modulfront.

Stetig wachsende, sowie sich häufig ändernde Anforderungen in der Prozessindustrie sowie der Energietechnik bedingen den Einsatz möglichst einfach wandelbarer und wartbarer Mittel- und Niederspannungsschaltanlagen. Zeitgemäße Anlagen weisen dabei in aller Regel mehrere in Einschubtechnik konzipierte Schaltschränke auf, welche vergleichsweise einfach zu bestücken und zu konfigurieren sind. Einschubtechnik bedeutet dabei, dass alle elektrischen Betriebsmittel sowie elektrischen Einrichtungen, wie beispielsweise als Komponenten verbaute Steuer und/oder Messeinrichtungen, vorzugsweise auf modularisierten Einschüben angeordnet sind.

Vorteilhaft ist dabei die vereinfachte Zugänglichkeit des jeweiligen Einschubmoduls, indem dieses im Bedarfsfall, beispielsweise bei einer Störung oder einem Ausfall, aber auch bei einer Umgestaltung der jeweiligen Schaltanlage, auf einfache Weise aus dem jeweiligen Schaltschrank entnommen und durch ein geeignetes Modul ersetzt werden kann.

Nachteilig handelt es sich bei den verbauten Steuer und/oder Messeinrichtungen jedoch in aller Regel um herkömmliche, allgemein verfügbare und nicht auf die Einschubtechnik abgestimmte elektrische bzw. elektronische Komponenten, die oftmals vergleichsweise viel Raum beanspruchen und einen erhöhten Konfigurationsaufwand bedingen. Dies führt im Rahmen von Reparatur- und Instandhaltungsmaßnahmen dann meist auch zu längeren Wartungs- und Ausfallzeiten.

Darüber hinaus ergibt sich durch den erhöhten Raumbedarf einzelner Komponenten oftmals eine räumliche Überdimensionierung des eigentlichen Moduls, da durch die spezifische Anordnung und Geometrie der einzelnen Komponenten - ein Modul kann nur so klein sein wie seine größte Komponente - ein Großteil des umbauten Raumes meist nicht nutzbar ist.

Aufgabe der Erfindung ist es, bei gegebener Funktonatität, ein Schaltanlagenmodul mit Steuereinrichtung mit vereinfachter Handhabung und verbesserter Raumausnutzung anzugeben.

Diese Aufgabe wird durch eine Schaltanlage mit den Merkmalen des Anspruch 9, ein Schaltanlagenmodul mit den Merkmalen des Anspruch 8 sowie eine Modulfront mit den Merkmalen des Anspruch 1 gelöst. Vorteilhafte Ausgestaltungen der Erfindung sind in den abhängigen Ansprüchen sowie der Figurenbeschreibung angegeben.

Die erfindungsgemäße elektrische Schaltanlage weist dabei wenigstens ein Schaltanlagenmodul, insbesondere ein Einschubmodul, mit einer Modulfront mit integrierter Steuereinrichtung auf, wobei auch die Modulfront integraler Bestandteil des jeweiligen Schaltanlagenmoduls ist.

Mit Hilfe der erfindungsgemäßen, an die jeweiligen Größenerfordernisse der Modultechnik angepassten Modulfront mit integrierter Steuereinrichtung, ist es nunmehr möglich den in dem betreffenden Schaltanlagenmodul zur Verfügung stehenden Raum bestmöglich zu nutzen. Darüber hinaus ist auch die Handhabung des jeweiligen Schaltanlagenmoduls und damit der elektrischen Schaltanlage verbessert und vereinfacht, indem im Bedarfsfall bei Störung und/oder bei Wartungs- oder Instandhaltungsarbeiten der Steuereinrichtung, lediglich die erfindungsgemäße Modulfront ausgewechselt werden muss, ohne dass die übrigen Komponenten und Einbauten des jeweiligen Schaltanlagenmoduls betroffen sind. Somit ist durch lediglich Wechsel der Modulfront das Schaltanlagenmodul in der elektrischen Schaltanlage schnellstmöglich wieder bestimmungsgemäß einsetzbar.

Die, in der Modulfront integrierte Steuereinrichtung umfasst dabei in einer vorteilhaften Ausgestaltung der Erfindung eine Steuerplatine, über welche Steuerbefehle und Anweisungen einer externen Ansteuerung verarbeitet und/oder an entsprechende Geräte und/oder Einbauten im Modul weitergegeben werden, beziehungsweise diese gesteuert werden.

Des Weiteren ist vorteilhaft vorsehbar, dass das wenigstens ein Schaltanlagenmodul betreffende Statusangaben oder Statusinformationen über eine vorkonfigurierbare Schnittstelle abrufbar zur Verfügung gestellt sind.

Bei der vorkonfigurierbaren Schnittstelle kann es sich dabei insbesondere um eine, mit einer entsprechend eingerichteten Datenverarbeitungseinrichtung auslesbare Schnittstelle, beispielsweise eine RS-232, RS485/RS422 und/oder eine USB-Schnittstelle handeln. Auch übliche Netz- oder Busanbindungen zum Auslesen der relevanten Statusinformationen über ein entsprechendes Bus- oder Leitsystem und/oder über ein lokales oder globales Netzwerk, insbesondere das Internet, beispielsweise zum Zwecke einer Ferndiagnose, sind vorteilhaft vorsehbar. Alternativ dazu sind auch Schnittstellen zur drahtlosen Informationsübertragung an ein entsprechendes Leitsystem und/oder eine dafür eingerichtete Datenverarbeitungseinrichtung, beispielsweise mittels Wireless LAN (WLAN) oder Bluetooth, vorsehbar.

In einer weiteren Ausführungsform der Erfindung ist in der Modulfront auch eine Anzeigeeinrichtung integriert, welche das Einschubmodul betreffende Statusinformationen visuell anzeigt. Die Anzeigeeinrichtung umfasst dabei vorzugsweise auch eine LED-Platine, die mit mehreren LED's und/oder mehreren farbigen und/oder wenigstens einer ein - oder mehrfarbigen LED bestückbar ist, um relevante Statusinformationen farbcodiert anzuzeigen.

Des Weiteren ist zusätzlich ein Klebeschild mit integriertem Schildträger vorsehbar, wobei ein frei beschriftbares Einsteckschild in den Schildträger einsteckbar ist.

Neben der visuellen Anzeige der Statusinformationen sieht eine alternative Ausgestaltung der Anzeigeeinrichtung auch eine akustische Anzeige vorbestimmbarer Statusinformationen vor, beispielsweise in Form eines, durch einen akustischen Signalgeber generierten Wamtons oder Signals bei Erreichen eines vorbestimmten Modulzustandes, insbesondere bei einem Funktionsausfall oder einer Funktionsstörung.

Die weitere Darlegung der Erfindung erfolgt anhand einiger Figuren und Ausführungsbeispiele.

Anhand der in den beigefügten Zeichnungen dargestellten Ausführungsbeispiele der Erfindung sollen die Erfindung, vorteilhafte Ausgestaltungen und Verbesserungen der Erfindung sowie besondere Vorteile der Erfindung näher erläutert und beschrieben werden.

Es zeigen:
Fig. 1 Explosionsdarstellung einer beispielhaft ausgestalteten Modulfront für ein Schaltanlagenmodul einer elektrischen Schaltanlage
Fig. 2 Darstellung der gemäß Fig. 1 beispielhaft ausgestalteten Modulfront in Blickrichtung von Unten
Fig. 3 Darstellung der gemäß Fig. 1 beispielhaft ausgestalteten Modulfront in Frontansicht
Fig. 4 Darstellung der gemäß Fig. 1 beispielhaft ausgestalteten Modulfront in Draufsicht
Fig. 5 Seitliche Schnittansicht der gemäß Fig. 1 beispielhaft ausgestalteten Modulfront

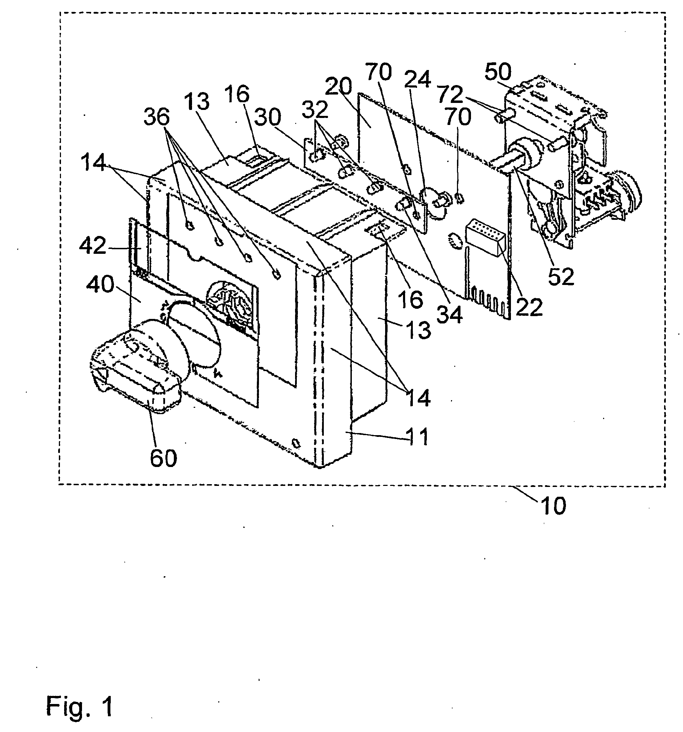

In Fig. 1 ist eine beispielhaft ausgestaltete Modulfront 1 für ein Einschubmodul für eine elektrische Schaltanlage in Explosionsdarstellung gezeigt.

Die gezeigte Modulfront 10 ist dabei integraler Bestandteil des jeweiligen Schaltanlagenmoduls und bildet anteilig das Modulgehäuse aus.
Die Modulfront 10 weist ein wannenartig ausgestaltetes Frontelement 11 mit einem Wannenboden 12 und vier inneren 13 sowie vier äußeren Seitenwänden 14 auf. Innere und äußere Seitenwände sind voneinander beabstandet angeordnet und schließen einen Zwischenraum zur Aufnahme des übrigen Modulgehäuses ein. Der Wannenboden 12, dessen Außenseite die Frontfläche 15 der Modulfront 10 ausbildet, weist dabei eine nahezu rechteckige Querschnittsfläche auf.

Die Modulfront 10 weist an ihren inneren Seitenwänden 13 Mittel 16 auf, die eine Verbindung der Modulfront 10 mit dem übrigen Modulgehäuse erlauben. Beispielsweise in Form von Ausnehmungen, um ein Verrasten mit Haken des übrigen Modulgehäuses zu ermöglichen und umgekehrt. Modulgehäuse und Modulfront weisen dabei jeweils komplementäre Verbindungsmittel auf.

Die Modulfront 10 umfasst eine integrierte Steuereinrichtung 20, die hier beispielhaft als Steuerplatine, über welche Steuerbefehle und Anweisungen einer externen Ansteuerung verarbeitbar sind, ausgeführt ist. Die Steuereinrichtung 20 bzw. die Steuerplatine weist wenigstens eine vorkonfigurierbare Schnittstelle 22 auf über welche das jeweilige Schaltanlagenmodul und/oder das durch das Modul kontrollierte Betriebsmittel betreffende Statusangaben oder Statusinformationen abrufbar zur Verfügung gestellt sind.

Bei der wenigstens einen vorkonfigurierbaren Schnittstelle 22 kann es sich dabei insbesondere um eine, mit geeigneten Datenverarbeitungseinrichtungen auslesbare Schnittstelle, beispielsweise eine RS-232, RS485/RS422 und/oder eine USB-Schnittstelle handeln, aber auch übliche Netz- oder Busanbindungen, wie beispielsweise eine Ethernet-Schnittstelle, zum Auslesen der relevanten Statusinformationen über ein entsprechendes Bus- oder Leitsystem und/oder über ein lokales oder globales Netzwerk sind vorteilhaft vorsehbar. Alternativ oder ergänzend dazu ist auch wenigstens eine Schnittstelle zur drahtlosen Informationsübertragung an ein entsprechendes Leitsystem und/oder eine dafür eingerichtete Datenverarbeitungseinrichtung, beispielsweise mittels Wireless LAN (WLAN) oder Bluetooth, vorsehbar.

Weiterhin weist die Modulfront 10 eine als LED-Platine ausgeführte, integrierte Anzeigeeinrichtung 30 auf, welche im Zugriff auf die Steuereinrichtung 20 das Einschubmodul und/oder das durch das Einschubmodul kontrollierte Betriebsmittel betreffende Statusinformationen visuell anzeigt. Die LED-Platine 30 umfasst dabei mehrere einfarbige LED's 32 und/oder wenigstens mehrfarbige LED 34, um relevante Statusinformationen farbcodiert anzuzeigen.

Neben der visuellen Anzeige von Statusinformationen ist auch eine akustische Anzeige vorbestimmter Statusinformationen vorsehbar, beispielsweise mittels eines akustischen Signalgebers, der bei Erreichen eines bestimmten Zustandes, insbesondere bei einem Funktionsausfall oder einer Funktionsstörung des jeweiligen Moduls und/oder des durch das jeweilige Modul kontrollierten Betriebsmittels, ein entsprechendes akustisches Signal ausgibt.

Im Wannenboden 12 der wannenartig ausgestalteten Modulfront 10 sind Ausnehmungen 36 und/oder wenigstens ein Sichtfenster vorgesehen, durch welche die LED's 32,34 der LED-Platine 30 von der Wannenbodenaußenseite , das heißt, der Frontplatte 15 der Modulfront 10 her einsehbar sind.

Des Weiteren ist auf der Wannenbodenaußenseite 15, also der Frontpartie der Modulfront 10, ein Klebeschild 40 mit integriertem Schildträger 42 zur Aufnahme eines frei beschriftbaren Einsteckschildes vorgesehen.

Zusätzlich umfasst die Modulfront 10 eine Verriegelungseinheit 50, insbesondere eine mechanische Einschubverriegelung, die mit einem auf der Frontplatte 15 angeordneten, drehbar gelagerten Verriegelungsknebel 60 und/oder Haupt- bzw. Funktionsschalter in Wirkverbindung steht, beispielsweise über eine Welle 52 sowie eine entsprechend ausgebildete Übersetzung. Demgemäß wird bei aktiviertem Schaltanlagenmodul über die Modulfront 10 mit Einschubverriegelung 50 eine Verriegelung des Schaltanlagenmoduls im Schaltschrank bewirkt und das Modul gegen Entnahme im Betrieb gesichert. Gleichzeitig werden die entsprechenden Betriebszustände wie Test, EIN, AUS sowie die Position des Einschubes, wie beispielsweise eingefahren, Trennstellung, Einschub entfernt, weitergemeldet.

Innerhalb der Modulfront 10 beziehungsweise der durch die Modulfront 10 ausgebildeten Wanne 12,13, befindet sich ausgehend vom Wannenboden 12 zunächst die Anzeigeeinrichtung 30, also die LED-Platine, dann die Steuereinrichtung 20, also die Steuerplatine, und abschließend die Verriegelungseinheit 50, also die mechanische Einschubverriegelung.

Um eine Wirkverbindung zwischen Verriegelungsknebel 60 und Verriegelungseinheit 50 zu ermöglichen weist die Steuerplatine 20 wenigstens eine Ausnehmung 24 für den Durchgriff einer Welle 52.

Einbauhilfen sind in Form weiterer Ausnehmung 70 und Schrauben 72 sowohl auf der mechanischen Verriegelungseinheit, der Steuerplatine als auch der LED-Platine vorgesehen.

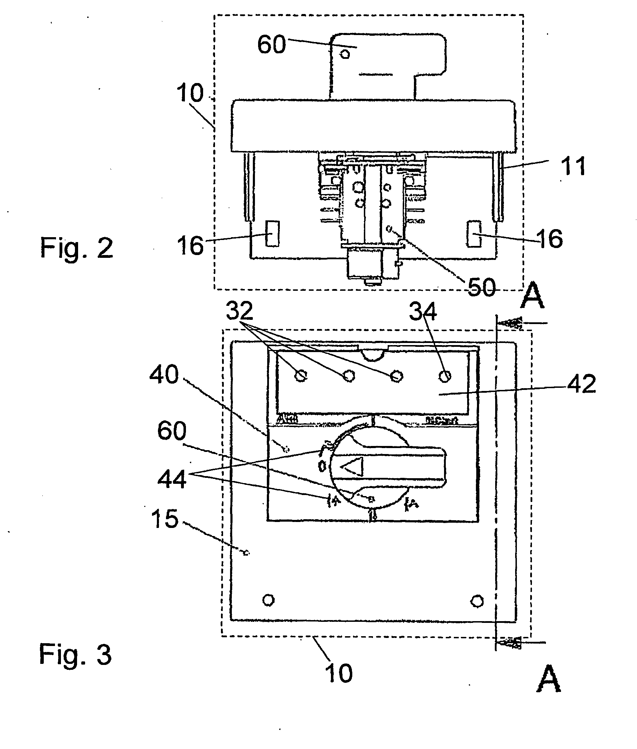

In Fig. 2 ist die gemäß Fig.1 beispielhaft ausgestaltete Modulfront 10 in der Ansicht von Unten her gezeigt, wobei der Verriegelungsknebel 60, die wannenartig ausgestaltete Frontelement 10 und die mechanische Einschubverriegelung 50 angegeben sind.

In Fig. 3 ist die gemäß Fig. 1 beispielhaft ausgestaltete Modulfront 10 in der Frontansicht, das heißt, in Blickrichtung auf die Frontfläche 15 der Modulfront 10 gezeigt. Die Frontfläche 15 der Modulfront 10 zeigt die vier LED's 32,34 der LED-Platine 30, den Verriegelungs-/Schaltknebel 60 und/oder Hauptschalter sowie das Klebeschild 40 mit integriertem Schildträger 42, der zur Aufnahme eines frei beschriftbaren Einsteckschildes vorgesehen ist. Das Klebeschild 40 weist im Bereich um den Verriegelungs-/Schaltknebel 60 mehrere Piktogramme 44 auf, die der jeweils gewählten Funktion und/oder dem jeweiligen Betriebszustand des Schaltanlagenmoduls entsprechen.

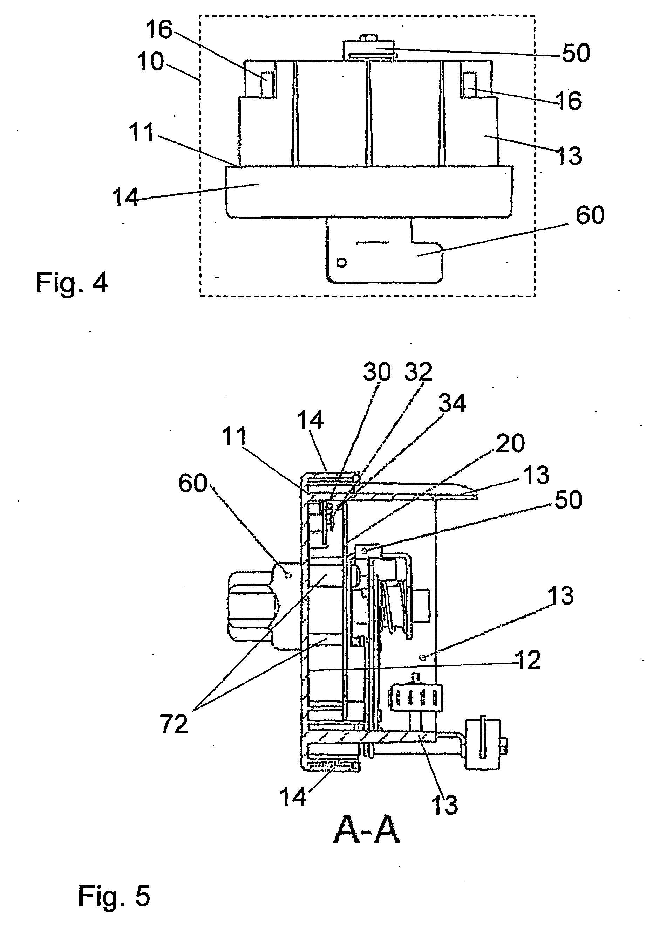

In Fig. 4 ist die gemäß Fig. 1 beispielhaft ausgestaltete Modulfront 10 in Draufsicht gezeigt, wobei der Verriegelungsknebel 60, die wannenartig ausgestaltete Modulfront 10 und anteilig die mechanische Einschubverriegelung 50 angegeben sind. Die übrigen Komponenten sind durch die Seitenwände verdeckt.

In Fig. 5 ist die gemäß Fig. 1 beispielhaft ausgestaltete Modulfront 10 in einer seitlichen Schnittansicht gezeigt. Die Schnittebene A-A und Blickrichtung auf diese Ebene ist in Fig. 4 durch die Markierungen A und die zugehörigen Pfeile angegeben. In Fig. 5 ist die Anordnung und Abfolge von Verriegelungsknebel 60, wannenartiger Modulfront 10 mit LED-Platine 30, Steuerplatine 20 und mechanischer Einschubverriegelung 50 angegeben.

## Patentansprüche

1. Modulfront (10) für ein Schaltanlagenmodul, insbesondere ein Einschubmodul, mit einer Steuereinrichtung (20), **dadurch gekennzeichnet, dass** die Steuereinrichtung (20) in der Modulfront (10) integriert angeordnet ist und die Modulfront (10) einen integralen Bestandteil des Schaltanlagenmoduls bildet und anteilig das jeweilige Modulgehäuse ausbildet, wobei ein wannenartig ausgestaltetes Frontelement (11) mit einem Wannenboden (12) und vier inneren (13) sowie vier äußeren Seitenwänden (14) vorgesehen und innere und äußere Seitenwände voneinander beabstandet angeordnet sind und einen Zwischenraum zur Aufnahme des übrigen Modulgehäuses einschließen und die Außenseite des Wannenbodens (12) die Frontfläche (15) der Modulfront (10) ausbildet und wobei die Steuereinrichtung (20) eine Steuerplatine umfasst, welche Steuerbefehle und Anweisungen einer externen Ansteuerung verarbeitet und/oder Geräte im Innern des jeweiligen Schaltanlagenmoduls steuert.

2. Modulfront (10) nach Anspruch 1, **dadurch gekennzeichnet, dass** die Steuereinrichtung (20) eine vorbestimmte Schnittstelle (22) aufweist, über die Statusinformationen des Schaltanlagenmoduls und/oder Informationen der kontrollierten Betriebsmittel abrufbar zur Verfügung gestellt sind.

3. Modulfront (10) nach einem der vorherigen Ansprüche, **dadurch gekennzeichnet, dass** eine Anzeigeeinrichtung (30) integriert angeordnet ist, welche Statusinformationen des jeweiligen Schaltanlagenmoduls und/oder des durch das Schaltanlagenmodul kontrollierten Betriebsmittels anzeigt.

4. Modulfront (10) nach Anspruch 3, **dadurch gekennzeichnet, dass** die Anzeigeeinrichtung (30) eine LED-Platine umfasst.

5. Modulfront nach Anspruch 4, **dadurch gekennzeichnet, dass** die LED-Platine mehrere ein- farbige LED's (32) und/oder wenigstens eine mehrfarbige LED (34) aufweist, um relevante Statusinformationen farbcodiert anzuzeigen.

6. Modulfront (10) nach einem der Ansprüche 3 bis 5, **dadurch gekennzeichnet, dass** ein Klebeschild (40) mit integriertem Schildträger (42) zur Aufnahme eines frei beschriftbaren Einsteckschildes vorgesehen ist.

7. Modulfront (10) nach Anspruch 6, **dadurch gekennzeichnet, dass** das Klebeschild (40) wenigstens ein Piktogramm (44) aufweist.

8. Schaltanlagenmodul, insbesondere ein Einschubmodul, mit einer Modulfront (10) gemäß einem der Ansprüche 1 bis 7.

9. Elektrische Schaltanlage, insbesondere eine Niederspannungs- oder Mittelspannungsschaltanlage, mit wenigstens einem Schaltanlagenmodul gemäß Anspruch 8.

## Claims

1. Module front (10) for a switchgear assembly module, in particular a withdrawable module, having a control device (20), **characterized in that** the control device (20) is arranged such that it is integrated in the module front (10), and the module front (10) forms an integral part of the switchgear assembly module and partially forms the respective module housing, wherein a front element (11) in the form of a trough and having a trough base (12) and four inner side walls (13) and four outer side walls (14) and inner and outer side walls are arranged spaced apart from one another and enclose an intermediate space for accommodating the rest of the module housing, and the outer side of the trough base (12) forms the front face (15) of the module front (10), and wherein the control device (20) comprises a control board, which processes control commands and instructions from an external drive system and/or controls devices in the interior of the respective switchgear assembly module.

2. Module front (10) according to Claim 1, **characterized in that** the control device (20) has a predetermined interface (22), via which status information of the switchgear assembly module and/or information of the controlled operating means are made available for callup.

3. Module front (10) according to one of the preceding claims, **characterized in that** a display device (30) is arranged such that it is integrated, which display device displays status information of the respective switchgear assembly module and/or of the operating means controlled by the switchgear assembly module.

4. Module front (10) according to Claim 3, **characterized in that** the display device (30) comprises an LED board.

5. Module front according to Claim 4, **characterized in that** the LED board has a plurality of monochromatic LEDs (32) and/or at least one multicolored LED (34) in order to display relevant status information in color-coded fashion.

6. Module front (10) according to one of Claims 3 to 5, **characterized in that** an adhesive label (40) with an integrated label carrier (42) for accommodating an insert label which can be written on freely is provided.

7. Module front (10) according to Claim 6, **characterized in that** the adhesive label (40) has at least one pictogram (44).

8. Switchgear assembly module, in particular a withdrawable module, having a module front (10) according to one of Claims 1 to 7.

9. Electrical switchgear assembly, in particular a low-voltage or medium-voltage switchgear assembly, having at least one switchgear assembly module according to Claim 8.

## Revendications

1. Front de module (10) pour un module d'installation de distribution, en particulier un module d'insertion, avec un dispositif de commande (20), **caractérisé en ce que** le dispositif de commande (20) est mis en place de manière intégrée dans le front de module (10) et **en ce que** le front de module (10) forme un élément constitutif intégral du module d'installation de distribution et forme proportionnellement le boîtier de module respectif, dans lequel un élément de front (11), réalisé à la manière d'une cuvette avec un fond de cuvette (12) et quatre parois latérales intérieures (13) tout comme quatre parois latérales extérieures (14), est prévu, et les parois latérales intérieures et extérieures étant disposées de manière espacée les unes des autres et enfermant un espace intermédiaire pour la réception du reste du boîtier de module, et le côté extérieur du fond de cuvette (12) formant la surface de front (15) du front de module (10), et dans lequel le dispositif de commande (20) comprend une platine de commande, laquelle traite des instructions de commande et des directives d'une commande externe et/ou commande des appareils à l'intérieur du module d'installation de distribution respectif.

2. Front de module (10) selon la revendication 1, **caractérisé en ce que** le dispositif de commande (20) présente une interface (22) prédéterminée par l'intermédiaire de laquelle des informations de statut du module d'installation de distribution et/ou des informations des moyens d'exploitation contrôlés sont mises à disposition de manière interrogeable.

3. Front de module (10) selon l'une des revendications précédentes, **caractérisé en ce qu'**un dispositif d'affichage (30) est mis en place de manière intégrée, lequel affiche des informations de statut du module d'installation de distribution respectif et/ou du moyen d'exploitation contrôlé par le module d'installation de distribution.

4. Front de module (10) selon la revendication 3, **caractérisé en ce que** le dispositif d'affichage (30) comprend une platine à DEL.

5. Front de module selon la revendication 4, **caractérisé en ce que** la platine à DEL présente plusieurs DEL (32) monochromes et/ou au moins une DEL (34) multicolore pour afficher de manière codée par couleurs des informations de statut pertinentes.

6. Front de module (10) selon l'une des revendications 3 à 5, **caractérisé en ce que** l'on prévoit une étiquette adhésive (40) avec un porte-étiquette (42) intégré pour la réception d'une étiquette d'insertion librement inscriptible.

7. Front de module (10) selon la revendication 6, **caractérisé en ce que** l'étiquette adhésive (40) présente au moins un pictogramme (44).

8. Module d'installation de distribution, en particulier module d'insertion, avec un front de module (10) selon l'une de revendications 1 à 7.

9. Installation de distribution électrique, en particulier installation de distribution de basse tension ou moyenne tension, avec au moins un module d'installation de distribution selon la revendication 8.
